(19) Europäisches Patentamt / European Patent Office / Office européen des brevets

(11) **EP 1 941 744 B1**

(12) **EUROPÄISCHE PATENTSCHRIFT**

(45) Veröffentlichungstag und Bekanntmachung des Hinweises auf die Patenterteilung:
**15.06.2011 Patentblatt 2011/24**

(51) Int Cl.:
**H04N 7/34** *(2006.01)*　　**H04N 7/36** *(2006.01)*

(21) Anmeldenummer: **06806804.8**

(22) Anmeldetag: **25.09.2006**

(86) Internationale Anmeldenummer:
**PCT/EP2006/066683**

(87) Internationale Veröffentlichungsnummer:
**WO 2007/048666 (03.05.2007 Gazette 2007/18)**

(54) **VERFAHREN UND VORRICHTUNGEN ZUR BESTIMMUNG UND REKONSTRUKTION EINES PRÄDIZIERTEN BILDBEREICHS**

METHODS AND DEVICES FOR THE DETERMINATION AND RECONSTRUCTION OF A PREDICTED IMAGE AREA

PROCEDE ET DISPOSITIFS DE DETERMINATION ET DE RECONSTRUCTION D'UNE ZONE D'IMAGE PREDITE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **25.10.2005 DE 102005051091**

(43) Veröffentlichungstag der Anmeldung:
**09.07.2008 Patentblatt 2008/28**

(73) Patentinhaber: **SIEMENS AKTIENGESELLSCHAFT
80333 München (DE)**

(72) Erfinder:
- **AGTHE, Bernhard
  81549 München (DE)**
- **BÄSE, Gero
  81739 München (DE)**
- **KUTKA, Robert
  82269 Geltendorf (DE)**
- **OERTEL, Norbert
  84032 Landshut (DE)**
- **PANDEL, Jürgen
  83620 Feldkirchen-Westerham (DE)**

(56) Entgegenhaltungen:
**EP-A- 0 644 695　　EP-A- 1 501 312
EP-A- 1 569 461**

- **NDJIKI-NYA P ET AL: "Improved H.264/AVC coding using texture analysis and synthesis" PROCEEDINGS 2003 INTERNATIONAL CONFERENCE ON IMAGE PROCESSING. ICIP-2003. BARCELONA, SPAIN, SEPT. 14 - 17, 2003, INTERNATIONAL CONFERENCE ON IMAGE PROCESSING, NEW YORK, NY : IEEE, US, Bd. VOL. 2 OF 3, 14. September 2003 (2003-09-14), Seiten 849-852, XP010669967 ISBN: 0-7803-7750-8**
- **SUGIMOTO K ET AL: "Inter frame coding with template matching spatio-temporal prediction" IMAGE PROCESSING, 2004. ICIP '04. 2004 INTERNATIONAL CONFERENCE ON SINGAPORE 24-27 OCT. 2004, PISCATAWAY, NJ, USA,IEEE, Bd. 1, 24. Oktober 2004 (2004-10-24), Seiten 465-468, XP010784855 ISBN: 0-7803-8554-3**

EP 1 941 744 B1

**Beschreibung**

Die Erfindung betrifft ein Verfahren und eine Vorrichtung zur Bestimmung eines prädizierten Bildbereichs sowie ein Verfahren und eine Vorrichtung zur Rekonstruktion eines prädizierten Bildbereichs.

Bei der digitalen Übertragung von Videodaten mit hoher Auflösung und Bildwiederholrate werden Videocodierverfahren mit hoher Kompressionseffizienz benötigt. Dabei wird oftmals eine Übertragungsrate dem Videocodierverfahren vorgegeben, bei dem eine hohe Bildqualität erreicht werden soll.

Heute gängige Videocodierverfahren sind beispielsweise standardisiert als MPEG2, MPEG4, ITU H.261, H. 263 und H.264 (MPEG - Motion-Picture Expert Group, ITU - International Telecommunication Union). Diese Videocodierverfahren basieren auf einem hybriden Ansatz, bestehend aus einer zeitlichen Prädiktion eines Bildinhalts (= Bewegungskompensation) verbunden mit einer Transformation, zum Beispiel einer DCT oder ICT (DCT - Discrete Cosinus Transformation, ICT - Integer Coded Transformation) und einer Quantisierung des nach der Bewegungskompensation und der Transformation verbleibenden Fehlersignals. Übertragen werden bei diesen Videocodierverfahren im Wesentlichen die Parameter des Bewegungsmodells (Vektoren, Blockmodus) und die resultierenden Koeffizienten des Restfehlersignals.

Durch eine Verbesserung der Kompressionseffizienz bei gleichbleibender Bildqualität wird eine Übertragungsdatenrate zur Übertragung einer komprimierten Videosequenz reduziert. Dies kann bspw. durch eine Verbesserung der Prädiktion erreicht werden. Ferner kann durch Verfeinerung eines Bildpunktrasters von Pixel- auf Halbpixelgenauigkeit die Bewegungsschätzung und somit die Bewegungskompensation verbessert werden. Eine weitere Steigerung der Kompressionseffizienz kann durch Reduktion von Blockgrößen erzielt werden, für die eine jeweilige Prädiktion im Rahmen der Bewegungsschätzung bzw. Bewegungskompensation durchgeführt wird. Neben einer Inter-Prädiktion, das heißt der Ausnutzung einer Korrelation zwischen Bildern, die zu unterschiedlichen Zeitpunkten aufgenommen worden sind, kann durch eine Intra-Prädiktion eine Erhöhung der Kompressionseffizienz erreicht werden. Bei dieser Intra-Prädiktion wird eine Prädiktion für einen Bildbereich auf Basis bereits codierter und rekonstruierter Bildinhalte des aktuellen Bildes durchgeführt.

Aus einer europäischen Patentanmeldung EP 1 501 312 A2 ist ein Bildcodier- und Decodiermethode und Vorrichtung bekannt, die für eine Prädiktion eines Bildblocks neben einer örtlichen und zeitlichen Prädiktion auch eine gewichtete Prädiktion vorsieht. Die gewichtete Prädiktion sieht vor, dass ein zur Prädiktion verwendeter Bildpunktewert durch gewichtete Addition eines oder mehrerer Bildpunktewerte eines Blocks derart gebildet wird, dass dieser Bildpunktewert oder diese mehren Bildpunktwerte mit einem ersten Gewichtungsfaktor multipliziert und die Multiplikation aus erstem Gewichtungsfaktor und Bildpunktwert mit einem zweiten Gewichtungsfaktor additiv überlagert werden.

Es ist die Aufgabe der vorliegenden Erfindung eine Möglichkeit zu schaffen, mit der eine Verbesserung einer Prädiktion ermöglicht wird.

Diese Aufgabe wird jeweils von den unabhängigen Ansprüchen gelöst. Vorteilhafte Weiterbildungen der Erfindung sind in den abhängigen Ansprüchen wiedergegeben.

Bei dem Verfahren zur Bestimmung eines prädizierten Bildbereichs für einen Bildbereich eines Bildes, werden ein zeitlicher Prädiktor für den Bildbereich auf Basis eines zum Bild zeitlich vorangegangenen rekonstruierten Vorgängerbildes ermittelt, ein örtlicher Prädiktor für den Bildbereich innerhalb eines rekonstruierten Bildbereichs des Bildes bestimmt, wobei ein Fehlermaß zwischen dem Bildbereich und dem auf Basis der zeitlichen und örtlichen Prädiktoren prädizierten Bildbereichs minimiert, der prädizierte Bildbereich durch den örtlichen Prädiktor unter Verwendung des rekonstruierten Bildbereichs und durch den zeitlichen Prädiktor unter Verwendung eines der Vorgängerbildes bestimmt wird.

Durch das erfindungsgemäße Verfahren wird ein Prädiktionsfehler (=Fehlermaß) auf Basis des durch die örtlichen und zeitlichen Prädiktoren rekonstruierten Bildbereichs und des zu prädizierenden Bildbereichs verkleinert. Dadurch kann eine Kompressionseffizienz erhöht werden, so dass ein reduziertes Speichervolumen bzw. eine schmalbandigere Übertragungsstrecke zur Speicherung bzw. Übermittlung eines mit dem erfindungsgemäßen Verfahren komprimierten Bildbereichs bzw. Bilddaten ermöglicht wird.

Wird der prädizierte Bildbereich durch Verknüpfung eines durch den zeitlichen Prädiktor gebildeten ersten Bildbereichs und eines durch den örtlichen Prädiktor beschriebenen zweiten Bildbereichs auf Grundlage einer Verknüpfungsregel erzeugt, so kann eine weitere Reduktion des Prädiktionsfehlers durch Anpassung der Verknüpfungsregel an den zu prädizierenden Bildbereich erreicht werden.

Wird vorzugsweise durch die Verknüpfungsregel eine gewichtete Verknüpfung mittels Gewichtungsfaktoren korrespondierender Bildpunkte des ersten und des zweiten Bildbereichs beschrieben, so kann die Verknüpfungsregel in einfacher und effizienter Weise realisiert werden.

Ferner können die Gewichtungsfaktoren für jeden Bildpunkt des ersten und/oder des zweiten Bildbereichs individuell beschrieben werden. Hierdurch wird eine weitere Verbesserung der Prädiktion des zu prädizierenden Bildbereichs, bzw. eine Reduktion des Prädiktionsfehlers erreicht.

Alternativ dazu kann vorzugsweise aufgrund der Verknüpfungsregel eine Drehung oder Scherung zumindest des ersten oder des zweiten Bildbereichs durchgeführt werden. Somit kann eine Anpassung des ersten und/oder zweiten Bildbereichs weiter verfeinert werden, sodass eine Steigerung einer Prädiktionsgenauigkeit ermöglicht wird.

In einer vorzugsweisen Erweiterung des Verfahrens wird aus einer Menge von unterschiedlichen Verknüpfungsregeln diejenige Verknüpfungsregeln ausgewählt, die das Fehlermaß minimiert. Dies hat den Vorteil, dass mit einem geringen zusätzlichen Signalisierungsaufwand die ausgewählte Verknüpfungsregel von einem Sender, z.B. mit einer Vorrichtung zur Durchführung des Verfahrens zur Bestimmung eines prädizierten Bildbereichs, zu einem Empfänger mit einer Vorrichtung zur Durchführung des Verfahrens zur Rekonstruktion eines prädizierten Bildbereichs übertragen werden kann.

Wird durch den örtlichen Prädiktor ein Bildbereich innerhalb des bereits rekonstruierten Bildbereiches des Bildes referenziert, so kann die Prädiktionsgenauigkeit des Verfahrens weiter verbessert werden.

Vorzugsweise wird zur Ermittlung des örtlichen Prädiktors aus einer Gruppe an vorgebbaren Intra-Prädiktionsmodi derjenige Intra-Prädiktionsmodus ausgewählt wird, der das Fehlermaß minimiert. Hierdurch wird eine einfache Vorgehensweise zur Ermittlung des örtlichen Prädiktors ermöglicht. Ferner kann durch Wiederverwendung von bereits aus Standards, wie z.B. H.264, bekannten Intra-Prädiktionsmodi, eine kostengünstige Implementierung erzielt werden.

Die Erfindung betrifft auch ein Verfahren zur Rekonstruktion eines prädizierten Bildbereichs, wobei der prädizierte Bildbereich durch einen örtlichen und einen zeitlichen Prädiktor bestimmt wird, die gemäß einem der vorhergehenden Ansprüche gebildet worden sind, bei dem der prädizierte Bildbereich durch Verknüpfung eines durch den zeitlichen Prädiktor gebildeten ersten Bildbereichs und eines durch den örtlichen Prädiktor beschriebenen zweiten Bildbereichs erzeugt wird.

Hierdurch wird ein Verfahren zur Verfügung gestellt, mit dem die im Verfahren zur Bestimmung eines prädizierten Bildbereichs für einen Bildbereich eines Bildes ermittelten örtlichen und zeitlichen Prädiktoren zur Rekonstruktion verwendet werden können. So kann das Verfahren zur Rekonstruktion eines prädizierten Bildbereichs im Rahmen eines Videodecodierverfahrens in einem Empfänger eingesetzt.

Die Ermittlungsvorrichtung zur Bestimmung eines prädizierten Bildbereichs für einen Bildbereich eines Bildes umfasst ein erstes Modul zum Ermitteln eines zeitlichen Prädiktors für den Bildbereich des Bildes auf Basis eines zum Bild zeitlich vorangegangenen rekonstruierten Vorgängerbildes, ein zweites Modul zum Bestimmen eines örtlichen Prädiktors für den zu prädizierenden Bildbereich auf Basis eines rekonstruierten Bildbereichs des Bildes, wobei ein Fehlermaß zwischen dem Bildbereich und dem auf Basis der zeitlichen und örtlichen Prädiktoren prädizierten Bildbereich minimiert wird, wobei der prädizierte Bildbereich durch den örtlichen Prädiktor unter Verwendung des rekonstruierten Bildbereichs und durch den zeitlichen Prädiktor unter Verwendung eines der Vorgängerbilder bestimmt wird. Mit Hilfe der Ermittlungsvorrichtung kann das Verfahren zur Bestimmung eines prädizierten Bildbereichs für einen Bildbereich eines Bildes sowie dessen Erweiterungen implementiert und ausgeführt werden.

Die Erfindung betrifft auch eine Rekonstruktionsvorrichtung zur Rekonstruktion eines prädizierten Bildbereichs, wobei der prädizierte Bildbereich durch einen örtlichen und einen zeitlichen Prädiktor bestimmt wird, wobei der örtliche Prädiktor und der zeitliche Prädiktor auf Grundlage einer Ermittlungsvorrichtung zur Bestimmung eines prädizierten Bildbereichs gebildet worden sind, mit einem ersten Rekonstruktionsmodul zum Bilden eines ersten Bildbereichs auf Basis des zeitlichen Prädiktors und eines der zum Bild zeitlich vorangegangenen Vorgängerbilder, einem zweiten Rekonstruktionsmodul zum Bilden des zweiten Bildbereichs auf Basis eines bereits im Bild rekonstruierten Bildbereichs, einem dritten Rekonstruktionsmodul zum Rekonstruieren des prädizierten Bildbereichs durch Verknüpfen des ersten und des zweiten Bildbereichs. Mit Hilfe der Rekonstruktionsvorrichtung kann das Verfahren zur Rekonstruktion eines prädizierten Bildbereichs sowie dessen Erweiterungen implementiert und ausgeführt werden.

Weitere Einzelheiten sowie Vorteile der Erfindung werden anhand der Zeichnung näher erläutert. Im Einzelnen zeigen:

Figur 1 im schematischer Darstellung das Verfahren bzw. die Vorrichtung zur Bestimmung eines prädizierten Bildbereichs;

Figur 2 in schematischer Darstellung die Vorrichtung bzw. das Verfahren zur Rekonstruktion eines prädizierten Bildbereichs;

Figur 3 eine Skizze einer üblichen Anordnung zur blockbasierten Bildcodierung mit einer Erweiterung zum Durchführen des Verfahrens zur Ermittlung eines prädizierten Bildbereichs;

Figur 4 Anordnung benachbarter Randpixel eines zu prädizierenden Bildbereichs bzw. Bildblocks.

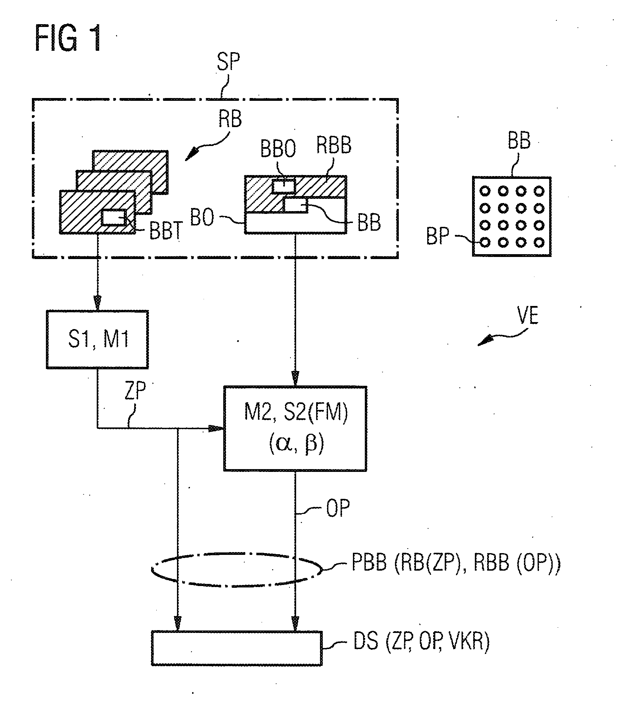

Elemente mit gleicher Funktion und Wirkungsweise sind in den Figuren 1 bis 4 mit denselben Bezugszeichen versehen.

Mit Hilfe von Figur 1 wird zunächst das Verfahren zur Ermittlung eines prädizierten Bil.dbereichs näher erläutert.

Ein Bild BO bzw. ein zum Bild B0 zeitlich vorangegangenes Bild RB umfasst mehrere Bildbereiche, die durch eine Vielzahl von, z.B. 8x8 oder 4x4, Bildpunkten BP gebildet werden. Jeder Bildpunkt BP repräsentiert dabei einen Helligkeitswert und/oder Farbwert. Für das folgende Ausführungsbeispiel wird für einen Bildbereich eine quadratische Form, z.B. ein Bildblock mit 4x4 Bildpunkten, angenommen. Im Allgemeinen kann ein Bildbereich eine beliebige Form annehmen.

In einem ersten Schritt S1 wird ein zeitlicher Prädiktor ZP für den Bildbereich BB ermittelt, der prädiziert werden soll. Dieser Bildbereich BB wird auch als zu prädizierender Bildbereich BB Bezeichnet. Zunächst wird ein erster Bildbereich BBT in einem der zum Bild B0 zeitlich vorangegangenen Bilder RB gesucht, der bspw. eine Summe der absoluten Differenzen korrespondierender Bildpunkte BP im zu prädizierenden Bildbereich BB und im ersten Bildbereich BBT minimiert.

Umfassen die jeweiligen Bildbereiche BB und BBT bspw. jeweils 4x4 Bildpunkte so kann dieser erste Schritt folgendermaßen formalisiert geschrieben werden:

$$SAD = \sum_{x=0}^{3} \sum_{y=0}^{3} \left| BB(x,y) - BBT(x,y) \right| \quad (1)$$

wobei x,y Positionen von Bildpunkten BP innerhalb der jeweiligen Bildbereiche BB, BBT und |.| einen Absolutbetrag wiedergeben. Es wird in Gleichung (1) derjenige erste Bildbereich BBT im zum Bild B0 zeitlich vorangegangenen Bild RB ermittelt, der diese Gleichung (1) minimiert, d.h. SAD wird minimal. Die Lage des ermittelten ersten Bildbereichs BBT wird durch den zeitlichen Prädiktor ZP repräsentiert. Der erste Bildbereich BBT kann sowohl auf Basis vorgegebener Bildpunkte des Bildes RB als auch durch eine Interpolation der Bildpunkte des Bildes RB, bspw. auf Zwischenbildpunkten (auf Englisch = halfpel), gebildet werden. Dem Fachmann sind derartige Verfahren aus einer Bewegungsschätzung, z.B. eines Standards H.263, hinlänglich bekannt

In einem zweiten Schritt S2 wird ein örtlicher Prädiktor OP ermittelt, der ein Fehlermaß FM zwischen dem zu prädizierenden Bildbereich BB und dem auf Basis der zeitlichen und örtlichen Prädiktoren ZP, OP prädizierten Bildbereich PBB minimiert. Das Fehlermaß FM entspricht einem Prädiktionsfehler. Der örtliche Prädiktor OP benutzt einen rekonstruierten Bildbereich RBB innerhalb des Bildes BO, der bereits rekonstruiert worden ist.

In einer ersten Variante des erfindungsgemäßen Verfahrens wird zur Bestimmung des örtlichen Prädiktors OP ein zweiter Bildbereich BBO im bereits rekonstruierten Bildbereich RBB ermittelt, der zusammen mit dem durch den zeitlichen Prädiktor ZP ermittelten ersten Bildbereich BBT das Fehlermaß FM minimiert. Dabei werden der erste und der zweite Bildbereich BBT, BBO mittels einer Verknüpfungsregel VKR verknüpft bzw. gemischt. Im vorliegenden Ausführungsbeispiel beschreibt die Verknüpfungsregel VKR eine gewichtete bildpunktweise Mischung des ersten und des zweiten Bildbereichs BBT, BBO mittels zugeordneter Gewichtungsfaktoren. Dies kann formal folgendermaßen angegeben werden:

$$FM = \sum_{x=0}^{3} \sum_{y=0}^{3} \left| BB(x,y) - \left( \frac{\alpha \cdot BBT(x,y) + \beta \cdot BBO(x,y)}{\alpha + \beta} \right) \right| \quad (2)$$

wobei x,y Positionen von Bildpunkten BP innerhalb der jeweiligen Bildbereiche BB, BBT, BBO, |.| den Absolutbetrag, $\alpha$ einen zeitlichen und $\beta$ einen örtlichen Gewichtungsfaktor darstellen. Dabei können $\alpha+\beta = 1$ ergeben. Es wird in Gleichung (2) derjenige zweite Bildbereich BBO im bereits rekonstruierten Bildbereich PBB ermittelt, der diese Gleichung (2) minimiert, d.h. FM wird minimal. Die Lage des ermittelten zweiten Bildbereichs BBO wird durch den örtlichen Prädiktor OP repräsentiert. Die Gewichtungsfaktoren $\alpha$ und $\beta$ können je nach Bildinhalt angepasst werden, z.B. wird bei $\alpha=0.2$ und $\beta=0.8$ eine größere Gewichtung dem zweiten als dem ersten Bildbereich BBO, BBT, d.h. der örtlichen als der zeitlichen Prädiktion, zugeordnet.

In Gleichung (2) entspricht der Term
$\{(\alpha \cdot BBT(x,y) + (\beta \cdot BBO(x,y))/(\alpha+\beta)\}$ dem prädizierten Bildbereich PBB. Somit wird der prädizierte Bildbereich PBB durch den zeitlichen Prädiktor ZP, der auf Basis des zum Bild B0 zeitlich vorangegangenen Bildes RB den ersten Bildbereich BBT beschreibt, d.h. RB(ZP), und den örtlichen Prädiktor OP, der unter Verwendung des rekonstruierten Bildbereichs RPP des Bildes BO den zweiten Bildbereich BBO wiedergibt, d.h. RBB(OP), dargestellt

Anstelle des Absolutbetrages in Gleichung (1) bzw. (2) können andere Funktionen treten, die eine Ähnlichkeit zwischen dem zu prädizierenden Bildbereich BO und dem prädizierten Bildbereich PBB beschreiben. So könnte das Fehlermaß FM anstelle durch den Absolutbetrag auch durch Quadrieren generiert werden, wie beispielsweise:

$$FM = \sum_{x=0}^{3} \sum_{y=0}^{3} \left( BB(x,y) - \left( \frac{\alpha \cdot BBT(x,y) + \beta \cdot BBO(x,y)}{\alpha + \beta} \right) \right)^2 \qquad (3)$$

Die Schritte S1 und S2 können im Rahmen eines Verfahrens zur Codierung eines oder mehrerer Bilder eingesetzt werden. Dabei können der örtliche und zeitliche Prädiktor OP, ZP in einem Datenstrom DS integriert und von einer Ermittlungsvorrichtung VE zur Ermittlung eines prädizierten Bildbereichs an eine Rekonstruktionsvorrichtung VD zur Rekonstruktion des prädizierten Bildbereichs übertragen werden.

Die gewichtete Verknüpfung bzw. Mischung gemäß Gleichung (2) stellt lediglich eine der möglichen Verknüpfungsregel VKR dar. So kann die Verknüpfungsregel VKR in Abhängigkeit der ermittelten zeitlichen und/oder örtlichen Prädiktoren ZP, OP gebildet werden. Ferner ist eine Auswahl einer Verknüpfungsregel VKR aus einer vorgegeben Menge an Verknüpfungsregeln derart durchführbar, dass die ausgewählte Verknüpfungsregel das Fehlermaß FM minimiert. Eine beispielhafte Auswahlmöglichkeit ist:

| VKR-Index | $\alpha$ | $\beta$ |
|-----------|-----|-----|
| 0 | 0.2 | 0.8 |
| 1 | 0.5 | 0.5 |
| 2 | 0.8 | 0.2 |

Der VKR-Index beschreibt die verwendete Verknüpfungsregel. Die ausgewählte Verknüpfungsregel kann in der Ermittlungsvorrichtung VE und der Rekonstruktionsvorrichtung VD separat generiert werden. Alternativ kann diese Verknüpfungsregel VKR mittels des Datenstroms DS übertragen werden.

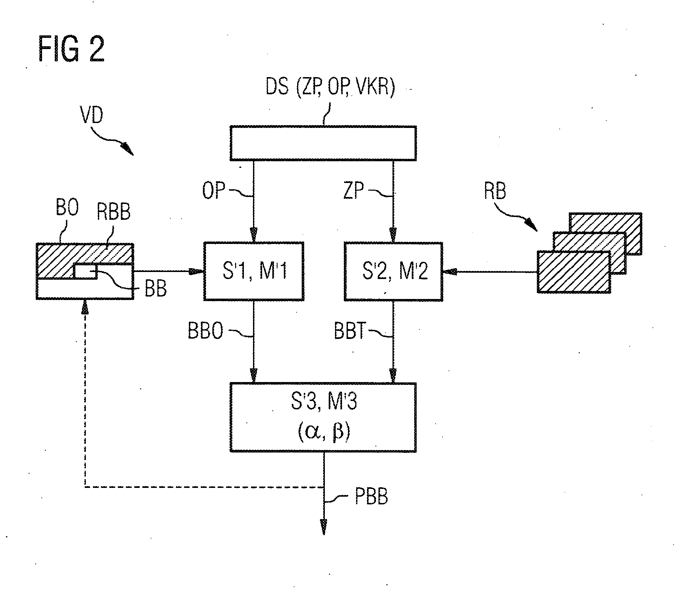

Anhand von Figur 2 wird das Rekonstruieren des prädizierten Bildbereichs PBB näher erläutert, wobei der zeitliche und örtliche Prädiktor ZP, OP gemäß dem erfindungsgemäßen Verfahren zur Ermittlung eines prädizierten Bildbereichs erstellt worden sind. Die Vorrichtung VD zur Rekonstruktion empfängt bspw. den Datenstrom DS, der den örtlichen und zeitlichen Prädiktor OP, ZP umfasst.

In einem ersten Rekonstruktionsschritt S'1 wird der zweite Bildbereich BBO durch Anwenden des örtlichen Prädiktors OP auf Basis des bereits rekonstruierten Bildbereichs RBB des Bildes BO gewonnen.

In einem zweiten Rekonstruktionsschritt S'2 wird der erste Bildbereich BBT auf Basis des zeitlichen Prädiktors ZP unter Verwendung des zum Bild B0 zeitlich vorangegangenen Bildes RB generiert.

In einem nachfolgenden dritten Rekonstruktionsschritt S'3 wird durch eine Mischung des ersten und des zweiten Bildbereichs BBT, BBO der prädizierte Bildbereich PBB ermittelt. Die Mischung kann durch eine bildpunktweise (x,y) gewichtete Mittlung der ersten und zweiten Bildbereiche erzeugt werden. Dies kann durch folgende Gleichung dargestellt werden:

$$PBB(x,y) = \frac{\alpha \cdot BBT(x,y) + \beta \cdot BBO(x,y)}{\alpha + \beta} \qquad (4),$$

wobei x,y Positionen von Bildpunkten BP innerhalb der jeweiligen Bildbereiche BBT, BBO, $\alpha$ dem zeitlichen und $\beta$ dem örtlichen Gewichtungsfaktor darstellen. Die Werte der hierbei verwendeten Gewichtungsfaktoren sind identisch bei dem Verfahren zur Ermittlung und dem Verfahren zur Rekonstruktion.

Der prädizierte und somit rekonstruierte Bildbereich PBB kann schließlich an die entsprechende Position innerhalb des rekonstruierten Bildbereichs RBB kopiert werden.

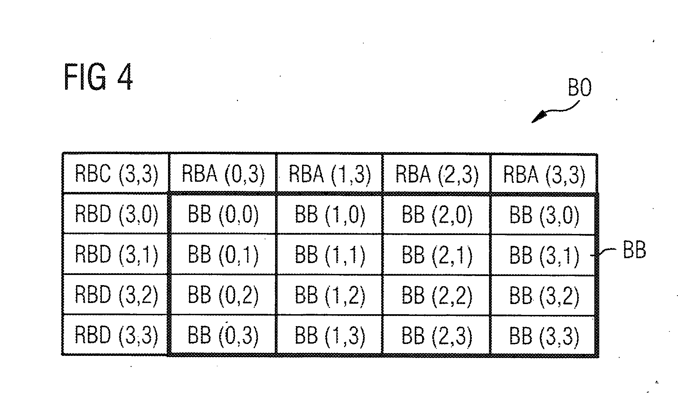

In einer zweiten Variante des Verfahrens wird zur Bestimmung des örtlichen Prädiktors OP wird ein Inträ-Prädiktionsmodus IPM ermittelt, der das Fehlermaß FM minimiert. Dabei wird der Intra-Prädiktionsmodus IPM auf Basis des rekonstruierten Bildbereichs RBB des Bildes BO ermittelt, wobei bspw. Randpixel direkt benachbarter rekonstruierter Bildbereiche des zu prädizierenden Bildbereichs BB berücksichtigt werden. Dies wird anhand der Figur 4 näher erklärt.

Figur 4 zeigt den zu prädizierenden Bereich BB, wobei die einzelnen Bildpunkte angeben sind, wie z.B. BB (0,0). Werden bspw. Bildbereiche von links nach rechts und von oben nach unten rekonstruiert, so ergibt sich der rekonstruierte Bildbereich RBB, wie z.B. in Figur 1 zu sehen ist. Zu diesem rekonstruierten Bildbereich gehören die bereits rekonstruierten Bildbereiche RBA, RBC und RBD, die sich oben, links oben und links an dem zu prädizierenden Bildbereich BB befinden. Hierbei sind einzelne Bildpunkte, wie z.B. RBA(3,3), angegeben, wobei diese Bildpunkte direkt an den zu prädizierenden Bildbereich BB angrenzen.

Zur Bestimmung des örtlichen Prädiktors OP wird einer der Intra-Prädiktionsmodi IPM ermittelt, der das Fehlermaß FM minimiert. Derartige Intra-Prädiktionsmodi IPM sind dem Fachmann bspw. aus dem Videocodierungsstandard H.264 bekannt. Dort werden acht unterschiedliche Intra-Prädiktionsmodi verwendet, die sich neben dem Gleichanteil - Prädiktionsmodus jeweils in der Prädiktionsrichtung unterscheiden. So sind bspw. gemäß H.264 folgende Intra-Prädiktionsmodi bekannt:

| Modus-Nummer | Bezeichnung |
|---|---|
| 0 | vertikaler Prädiktionsmodus |
| 1 | horizontaler Prädiktionsmodus |
| 2 | Gleichanteil - Prädiktionsmodus |
| 3 | Diagonal-Abwärts-Links Prädiktionsmodus |
| 4 | Diagonal-Abwärts-Rechts Prädiktionsmodus |
| 5 | Vertikal-Rechts Prädiktionsmodus |
| 6 | Horizontal-Abswärts Prädiktionsmodus |
| 7 | Vertikal-Links Prädiktionsmodus |
| 8 | Horizontal-Aufwärts Prädiktionsmodus |

Somit kann durch Angabe der Modus-Nummer des Intra-Prädiktionsmodus eine der Vorschriften zur Bildung des dazugehörigen Intra-Prädiktionsmodus angegeben werden. Wird bspw. die Modus-Nummer 2 verwendet, so ergibt sich ein identischer Prädiktionswert für alle Bildpunkte des zweiten Bildbereichs BBO. Dieser lautet:

$$BBO(x,y) = \frac{\sum_{i=0}^{3} RBA(i,3) + \sum_{i=0}^{3} RBD(3,i) + 4}{8} \qquad (5)$$

wobei mit i der entsprechende Bildpunkt identifiziert wird. Der aus der Gleichung 5 ergebende Prädiktionswert wird allen Bildpunkten des zweiten Bildbereichs BBO zugewiesen.

Zu Ermittlung eines optimalen Intra-Prädiktionsmodus IPM werden bspw. für alle Intra-Prädiktionsmodi IPM zweite Bildbereiche BBO berechnet und diese jeweils der Gleichung (3) zugeführt. Abschließend wird der Intra-Prädiktionsmodus IPM ausgewählt, der das Fehlermaß FM minimiert. Der ermittelte Intra-Prädiktionsmodus IPM wird durch den örtlichen Prädiktor OP repräsentiert. Minimiert bspw. der Intra-Prädiktionsmodus mit der Modus-Nummer 5 das Fehlermaß, so ist OP=5.

In Gleichung (3) ist eine gewichtete Mittelung der jeweiligen Bildpunkte des ersten und zweiten Bildbereichs BBT, BBO derart durchgeführt worden, dass jeder Bildpunkt des ersten Bildbereichs mit dem zeitlichen Gewichtungsfaktor $\alpha$ und jeder Bildpunkt des zweiten Bildbereichs mit dem örtlichen Gewichtungsfaktor $\beta$ multipliziert worden ist. In einer Erweiterung des erfindungsgemäßen Verfahrens wird jeder Bildpunkt mit einem individuellen zeitlichen bzw. örtlichen Gewichtungsfaktor $\alpha(x,y), \beta(x,y)$ versehen. Derartige individuelle zeitliche bzw. örtliche Gewichtungsfaktoren können bzw. ein folgendes Aussehen aufweisen:

$$\alpha(x,y) = \begin{bmatrix} 0.2 & 0.2 & 0.2 & 0.2 \\ 0.2 & 0.5 & 0.5 & 0.5 \\ 0.2 & 0.5 & 0.8 & 0.8 \\ 0.2 & 0.5 & 0.8 & 1.0 \end{bmatrix}, \beta(x,y) = \begin{bmatrix} 0.8 & 0.8 & 0.8 & 0.8 \\ 0.8 & 0.5 & 0.5 & 0.5 \\ 0.8 & 0.5 & 0.2 & 0.2 \\ 0.8 & 0.5 & 0.2 & 0.0 \end{bmatrix}$$

Eine Verwendung derartiger individueller zeitlicher und örtlicher Gewichtungsfaktoren $\alpha(x,y), \beta(x,y)$ hat zur Folge, dass am linken oberen Rand des zu prädizierenden Bildbereichs die örtliche Prädiktion einen stärkeren Einfluss auf die gewichtete Überlagerung erhält als am unteren rechten Rand.

Bei Verwendung identischer zeitlicher bzw. örtlicher Gewichtungsfaktoren für jeden Bildpunkt werden die Gleichungen (2) und (4) folgendermaßen erweitert:

$$FM = \sum_{x=0}^{3} \sum_{y=0}^{3} \left| BB(x, y) - \left( \frac{\alpha(x, y) \cdot BBT(x, y) + \beta(x, y) \cdot BBO(x, y)}{\alpha(x, y) + \beta(x, y)} \right) \right| \qquad (6)$$

$$PBB(x, y) = \frac{\alpha(x, y) \cdot BBT(x, y) + \beta(x, y) \cdot BBO(x, y)}{\alpha(x, y) + \beta(x, y)} \qquad (7),$$

Ferner können individuelle örtliche bzw. zeitliche Gewichtungsfaktoren $\alpha(x,y)$, $\beta(x,y)$ jeweils in Abhängigkeit des ausgewählten Intra-Prädiktionsmodus IPM unterschiedlich gewählt werden.

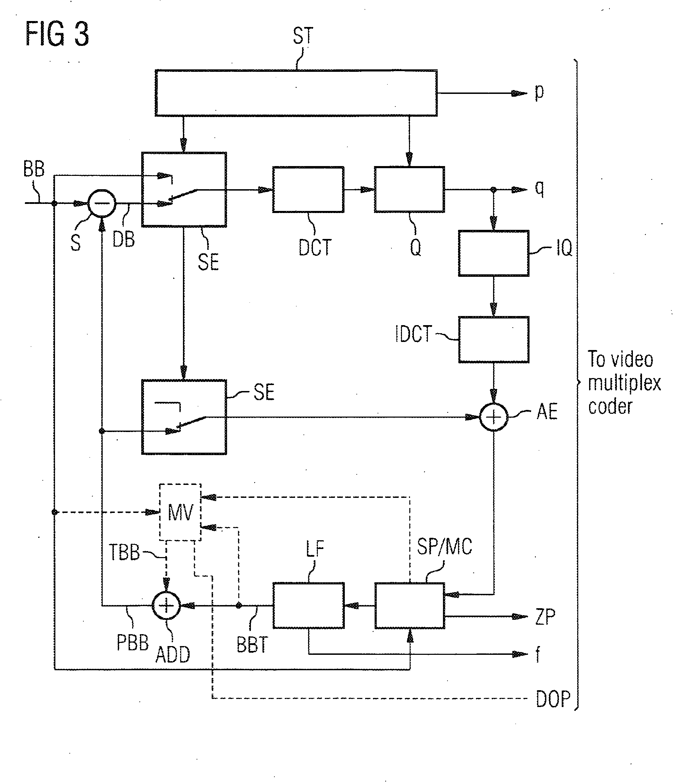

Das Verfahren zur Bestimmung eines prädizierten Bildbereichs sowie das Verfahren zur Rekonstruktion eines prädizierten Bildbereichs kann in einem Bildcodierverfahren eingesetzt werden. Dies wird anhand von Figur 3 beispielhaft erläutert. In Figur 3 ist in detaillierter Form eine mögliche Anordnung in Form eines Prinzipschaltbilds zur Bildcodierung bzw. zur Bilddecodierung dargestellt, die im Rahmen einer blockbasierten Bildcodierung verwendet werden kann: Dabei wird die Verwendung der Verfahrens in einem Videocodierverfahren näher dargestellt, wobei Erweiterungen zur Integration der Verfahren zur Bestimmung bzw. Rekonstruktion gestrichelt eingezeichnet sind.

Bei blockbasierten Bildcodierungsverfahren wird ein digitalisiertes Bild BO, RB, in üblicherweise quadratische Bildbereiche BB der Größe 8x8 Bildpunkte BP oder 16x16 Bildpunkte BP aufgeteilt und der Anordnung zur Bildcodierung zugeführt.

Einem Bildpunkt ist üblicherweise Codierungsinformation eindeutig zugeordnet, beispielsweise Helligkeitsinformation (Luminanzwerte) oder Farbinformation (Chrominanzwerte).

Bei den blockbasierten Bildcodierungsverfahren wird zwischen verschiedenen Bildcodierungsmodi unterschieden. Bei dem sog. Intra-Bildcodierungs-Modus wird jeweils das gesamte Bild mit der gesamten, den Bildpunkte des Bildes zugeordneten Codierungsinformation codiert und übertragen (I-Bild). Bei dem sog. Inter-Bildcodierungs-Modus wird jeweils nur die Differenzbildinformation zweier zeitlich aufeinander folgender Bilder codiert und übertragen (P-Bild, B-Bild).

Zum Umschalten zwischen dem Intra-Bildcodierungs-Modus und dem Inter-Bildcodierungs-Modus sind zwei Schaltereinheiten SE vorgesehen. Zur Durchführung des Inter-Bildcodierungs-Modus ist eine Subtraktionseinheit S vorgesehen, in der die Differenz der Bildinformation zweier aufeinander folgender Bilder gebildet wird. Die gesamte Bildcodierung wird über eine Bildcodierungs-Steuereinheit ST gesteuert. Die zu codierenden Bildbereiche BB bzw. Differenzbildbereiche DB werden jeweils einer Transformationscodierungseinheit DCT zugeführt, in der auf die den Bildpunkten zugeordnete Codierungsinformation eine Transformationscodierung, beispielsweise die diskrete Cosinustransformation (DCT) angewendet werden.

Allgemein kann jedoch jede beliebige Transformationscodierung, beispielsweise eine diskrete Sinustransformation oder auch eine diskrete Fouriertransformation durchgeführt werden.

Die durch die Transformationscodierung gebildeten Spektralkoeffizienten werden in einer Quantisierungseinheit Q quantisiert und einen Bildcodierungsmultiplexer (nicht dargestellt) beispielsweise zur Kanalcodierung und/oder zur Entropiecodierung zugeführt. In einer internen Rekonstruktionsschleife werden die quantisierten Spektralkoeffizienten invers quantisiert in einer inversen Quantisierungseinheit IQ und einer inversen Transformationscodierung in einer inversen Transformationscodierungseinheit IDCT unterzogen.

Ferner wird im Fall der Inter-Bildcodierung in einer Addiereinheit AE Bildinformation des jeweiligen zeitlich vorangegangenen Bildes hinzuaddiert. Die auf diese Weise rekonstruierten Bilder werden in einem Bildspeicher SP gespeichert. In dem Bildspeicher SP ist zur einfacheren Darstellung eine Einheit zur Bewegungsschätzung/Bewegungskompensation MC symbolisch dargestellt. Diese Einheit zur Bewegungskompensation MC erzeugt einen Bewegungsvektor, d. h. den zeitlichen Prädiktor ZP.

Ferner ist ein Schleifenfilter (Loopfilter LF) vorgesehen, das mit dem Speicher SP sowie der Subtraktionseinheit S verbunden ist.

Dem Bildcodierungsmultiplexer werden zusätzlich zu den zu übertragenen Bilddaten ein Modusflag p zugeführt, mit dem jeweils angegeben wird, ob eine Intra-/ oder Inter-Bildcodierung vorgenommen wurde.

Ferner werden Quantisierungsindizes q für die Spektralkoeffizienten dem Bildcodierungsmultiplexer zugeführt.

Auch der zeitliche Prädiktor ZP, d.h. ein Bewegungsvektor, wird jeweils einem Bildbereich bzw. Bildblock und/ oder einem Makroblock, der beispielsweise vier Bildblöcke mit Helligkeitsinformation und zwei Bildblöcke mit Farbinformation aufweist zugeordnet und dem Bildcodierungsmultiplexer zugeführt.

Ferner ist eine Informationsangabe f zum Aktivieren bzw. Deaktivieren des Schleifenfilters LF vorgesehen.

Einem Modul MV sind der zu prädizierende Bildbereich BB, der erste Bildbereich BBT und der rekonstruierte Bildbereich RBB zugänglich. Der erste Bildbereich BBT wird unter Verwendung der Bewegungsschätzung MC und nach Anwendung des Schleifenfilters LF erzeugt. Das Modul MV ermittelt zunächst den örtlichen Prädiktor OP, der das Fehlermaß minimiert, z.B. nach Gleichung (3).

Das Modul MV generiert dann einen temporären Bildbereich TBB, der folgende Gleichung erfüllt:

$$PBB(x, y) = BBT(x, y) + TBB(x, y) \quad (8)$$

Mit Hilfe dieses temporären Bildbereichs TBB wird erreicht, dass nach einer Addition dieses temporären Bildbereichs TBB mit dem ersten Bildbereich BBT in der zusätzlichen Addiereinheit ADD der prädizierte Bildbereich PBB entsteht, der weiterverarbeitet werden kann. Bei Verwendung der Gleichung (4) ergibt sich TBB(x,y) zu:

$$TBB(x, y) = \frac{\beta}{\alpha + \beta} \cdot \left( BBO(x, y) - BBT(x, y) \right) \quad (9)$$

Das Verfahren zur Ermittlung des prädizierten Bildbereichs PBB kann durch die Ermittlungsvorrichtung VE realisiert werden. Diese Ermittlungsvorrichtung umfasst folgende Einheiten:

- ein erstes Modul M1 zum Ermitteln des zeitlichen Prädiktors ZP für den zu prädizierenden Bildbereich, BB des Bildes B0 auf Basis eines zum Bild B0 zeitlich vorangegangenen rekonstruierten Vorgängerbildes RB;
- ein zweites Modul M2 zum Bestimmen des örtlichen Prädiktors OP für den zu prädizierenden Bildbereich BB auf Basis eines rekonstruierten Bildbereichs RBB des Bildes B0, wobei das Fehlermaß FM zwischen dem zu prädizierenden Bildbereich BB und dem auf Basis des zeitlichen und des örtlichen Prädiktors ZP, OP prädizierten Bildbereich PBB minimiert wird, wobei der prädizierte Bildbereich PBB durch den örtlichen Prädiktor OP unter Verwendung des rekonstruierten Bildbereichs RBB und durch den zeitlichen Prädiktor Z) unter Verwendung eines der Vorgängerbilder RB bestimmt wird.

Diese Ermittlungsvorrichtung VE kann in einer Vorrichtung integriert werden, welche ein Videocodierverfahren ausführt.

Das Verfahren zur Rekonstruktion des prädizierten Bildbereichs RBB ist durch die Rekonstruktionsvorrichtung DV realisierbar. Dabei umfasst diese Rekonstruktionsvorrichtung DV folgende Rekonstruktionsmodule:

- erstes Rekonstruktionsmodul M'1 zum Bilden des ersten Bildbereichs BBT auf Basis des zeitlichen Prädiktors ZP und eines der zum Bild BO zeitlich vorangegangenen Vorgängerbildes RB;
- zweites Rekonstruktionsmodul M'2 zum Bilden des zweiten Bildbereichs BBO auf Basis des bereits im Bild BO rekonstruierten Bildbereichs RBBM
- drittes Rekonstruktionsmodul M'3 zum Rekonstruieren des prädizierten Bildbereichs durch Verknüpfen des ersten und des zweiten Bildbereichs BBT, BBO unter Berücksichtigung der Verknüpfungsregel VKR.

Diese Rekonstruktionsvorrichtung VD kann in einer Vorrichtung integriert werden, welche ein Videocodierverfahren ausführt.

Die Ermittlungsvorrichtung VE und die Rekonstruktionsvorrichtung VD können in einem Mobilfunkgerät, z.B. arbeitend nach GSM-Standard (GSM- Global System for Mobile Communications), oder in einem Festnetzgerät, z.B. einem Computer, der an ein LAN (LAN-Local Area Network) angeschlossen ist, integriert sein. Ferner können die Vorrichtungen VD, VE in Hardware, als ausführbare Software auf einem Prozessor, oder als Kombination aus Software und Hardware implementiert und ausgeführt werden.

**Patentansprüche**

1. Verfahren zur Bestimmung eines prädizierten Bildbereichs (PBB) für einen Bildbereich (BB) eines Bildes (B0), bei dem

   a) in einem ersten Schritt ein zeitlicher Prädiktor (ZP) für den Bildbereich (BB) auf Basis eines zum Bild (B0) zeitlich vorangegangenen rekonstruierten Vorgängerbildes (RB) ermittelt wird,
   b) in einem zweiten Schritt ein örtlicher Prädiktor (OP) für den Bildbereich (BB) innerhalb eines rekonstruierten Bildbereichs (RBB) des Bildes (B0) bestimmt wird, der ein Fehlermaß (FM) zwischen dem zu prädizierenden Bildbereich (BB) und dem auf Basis der zeitlichen und örtlichen Prädiktoren (ZP, OP) prädizierten Bildbereich (PBB) minimiert,
   c) der prädizierte Bildbereich (PBB) durch den örtlichen Prädiktor (OP) unter Verwendung des rekonstruierten Bildbereichs (RBB) und durch den zeitlichen Prädiktor (ZP) unter Verwendung eines der Vorgängerbilder (RB) bestimmt wird.

2. Verfahren nach Anspruch 1,
   **dadurch gekennzeichnet, dass**
   der prädizierte Bildbereich (PBB) durch Verknüpfung eines durch den zeitlichen Prädiktor (ZP) gebildeten ersten Bildbereichs (BBT) und eines durch den örtlichen Prädiktor (OP) beschriebenen zweiten Bildbereichs (BBO) auf Grundlage einer Verknüpfungsregel (VKR) erzeugt wird.

3. Verfahren nach Anspruch 2,
   **dadurch gekennzeichnet, dass**
   durch die Verknüpfungsregel (VKR) eine gewichtete Verknüpfung mittels Gewichtungsfaktoren ($\alpha$, $\beta$) korrespondierender Bildpunkte (BP) des ersten und des zweiten Bildbereichs (BBT, BBO) beschrieben wird.

4. Verfahren nach Anspruch 3,
   **dadurch gekennzeichnet, dass**
   die Gewichtungsfaktoren ($\alpha$, $\beta$) für jeden Bildpunkt (BP) des ersten und/oder des zweiten Bildbereichs (BBT, BBO) individuell beschrieben wird.

5. Verfahren nach einem der Ansprüche 2 bis 4,
   **dadurch gekennzeichnet, dass**
   aufgrund der Verknüpfungsregel (VKR) eine Drehung oder Scherung zumindest des ersten oder des zweiten Bildbereichs (BBT, BBO) durchgeführt wird.

6. Verfahren nach einem der Ansprüche 2 bis 5,
   **dadurch gekennzeichnet, dass**
   aus einer Menge von unterschiedlichen Verknüpfungsregeln diejenige Verknüpfungsregel (VKR) ausgewählt wird, die das Fehlermaß (FM) minimiert.

7. Verfahren nach einem der vorhergehenden Ansprüche,
   **dadurch gekennzeichnet, dass**
   durch den örtlichen Prädiktor (OP) ein Bildbereich innerhalb des bereits rekonstruierten Bildbereiches (RBB) des Bildes (BO) referenziert wird.

8. Verfahren nach einem der vorhergehenden Ansprüche,
   **dadurch gekennzeichnet, dass**
   zur Ermittlung des örtlichen Prädiktors (OP) aus einer Gruppe an vorgebbaren Intra-Prädiktionsmodi derjenige Intra-Prädiktionsmodus (IPM) ausgewählt wird, der das Fehlermaß (FM) minimiert.

9. Verfahren zur Rekonstruktion eines prädizierten Bildbereichs (PBB), wobei der prädizierte Bildbereich (PBB) durch einen örtlichen und einen zeitlichen Prädiktor (OP, ZP) bestimmt wird, die aufgrund eines Verfahrens zur Bestimmung eines prädizierten Bildbereichs gemäß einem der vorhergehenden Ansprüche gebildet worden sind, bei dem der prädizierte Bildbereich (PBB) durch Verknüpfung eines durch den zeitlichen Prädiktor (ZP) gebildeten ersten Bildbereichs (BBT) und eines durch den örtlichen Prädiktor (OP) beschriebenen zweiten Bildbereichs (BBO) erzeugt wird.

10. Ermittlungsvorrichtung (VE) zur Bestimmung eines prädizierten Bildbereichs (PBB) für einen Bildbereich (BB) eines Bildes (B0), mit

- einem ersten Modul (M1) zum Ermitteln eines zeitlichen Prädiktors (ZP) für den Bildbereich (BB) des Bildes (B0) auf Basis eines zum Bild (B0) zeitlich vorangegangenen rekonstruierten Vorgängerbildes (RB) in einem ersten Schritt
- einem zweite Modul (M2) zum Bestimmen eines örtlichen Prädiktors (OP) in einem zweiten Schritt für den Bildbereich (BB) auf Basis eines rekonstruierten Bildbereichs (RBB) des Bildes (BO), der ein Fehlermaß (FM) zwischen dem zu prädizierenden Bildbereich (BB) und dem auf Basis der zeitlichen und örtlichen Prädiktoren (ZP, OP) prädizierten Bildbereich (PBB) minimiert, wobei der prädizierte Bildbereich (PBB) durch den örtlichen Prädiktor (OP) unter Verwendung des rekonstruierten Bildbereichs (RBB) und durch den zeitlichen Prädiktor (ZP) unter Verwendung eines der Vorgängerbilder (RB) bestimmt wird.

11. Rekonstruktionsvorrichtung (VD) zur Rekonstruktion eines prädizierten Bildbereichs (PBB), wobei der prädizierte Bildbereich (PBB)durch einen örtlichen und einen zeitlichen Prädiktor (OP, ZP) bestimmt wird, wobei der örtliche Prädiktor (OP) und der zeitliche Prädiktor (ZP) auf Grundlage einer Ermittlungsvorrichtung (VE) zur Bestimmung eines prädizierten Bildbereichs (PBB) gemäß dem Anspruch 10 gebildet worden sind, mit

- einem ersten Rekonstruktionsmodul (M'1) zum Bilden eines ersten Bildbereichs (BBT) auf Basis des zeitlichen Prädiktors (ZP) und eines der zum Bild (BO) zeitlich vorangegangenen Vorgängerbilder (RB);
- einem zweiten Rekonstruktionsmodul (M'2) zum Bilden des zweiten Bildbereichs (BBO) auf Basis eines bereits im Bild (BO) rekonstruierten Bildbereichs (RBB);
- einem dritten Rekonstruktionsmodul (M'3) zum Rekonstruieren des prädizierten Bildbereichs (PBB) durch Verknüpfen des ersten und des zweiten Bildbereichs (BBT, BBO).

**Claims**

1. Method for determining a predicted image region (PBB) for an image region (BB) of an image (BO), wherein

   a) in a first step a temporal predictor (ZP) is determined for the image region (BB) based on a reconstructed predecessor image (RB) temporally preceding the image (BO),
   b) in a second step a local predictor (OP) is determined for the image region (BB) within a reconstructed image region (RBB) of the image (BO), which minimises a degree of error (FM) between the image region (BB) to be predicted and the image region (PBB) predicted on the basis of the temporal and local predictors (ZP, OP),
   c) the predicted image region (PBB) is determined by the local predictor (OP) using the reconstructed image region (RBB) and by the temporal predictor (ZP) using one of the predecessor images (RB).

2. Method according to claim 1,
   **characterised in that**
   the predicted image region (PBB) is generated by linking a first image region (BBT) formed by the temporal predictor (ZP) and a second image region (BBO) described by the local predictor (OP) based on a linking rule (VKR).

3. Method according to claim 2,
   **characterised in that**
   the linking rule (VKR) describes a weighted linking by means of weighting factors ($\alpha$, $\beta$) of corresponding pixels (BP) of the first and second image regions (BBT, BBO).

4. Method according to claim 3,
   **characterised in that**
   the weighting factors ($\alpha$, $\beta$) for each pixel (BP) of the first and/or second image region (BBT, BBO) are described individually.

5. Method according to one of claims 2 to 4,
   **characterised in that**
   rotation or cropping of at least the first or second image region (BBT, BBO) is carried out based on the linking rule (VKR).

6. Method according to one of claims 2 to 5,

**characterised in that**
the linking rule (VKR), which minimises the degree of error (FM), is selected from a set of different linking rules.

7. Method according to one of the preceding claims,
   **characterised in that**
   an image region within the already reconstructed image region (RBB) of the image (B0) is referenced by the local predictor (OP).

8. Method according to one of the preceding claims,
   **characterised in that**
   to determine the local predictor (OP) from a group of predeterminable intra-prediction modes, the intra-prediction mode (IPM), which minimises the degree of error (FM), is selected.

9. Method for reconstructing a predicted image region (PBB), wherein the predicted image region (PBB) is determined by a local and a temporal predictor (OP, ZP), which were formed based on a method for determining a predicted image region according to one of the preceding claims, with the predicted image region (PBB) being generated by linking a first image region (BBT) formed by the temporal predictor (ZP) and a second image region (BBO) described by the local predictor (OP).

10. Determination device (VE) for determining a predicted image region (PBB) for an image region (BB) of an image (B0), with

    - a first module (M1) to determine a temporal predictor (ZP) for the image region (BB) of the image (B0) based on a reconstructed predecessor image (RB) temporally preceding the image (B0) in a first step;
    - a second module (M2) to determine a local predictor (OP) for the image region (BB) in a second step based on a reconstructed image region (RBB) of the image (B0), which minimises a degree of error (FM) between the image region (BB) to be predicted and the image region (PBB) predicted on the basis of the temporal and local predictors (ZP, OP), with the predicted image region (PBB) being determined by the local predictor (OP) using the reconstructed image region (RBB) and by the temporal predictor (ZP) using one of the predecessor images (RB).

11. Reconstruction device (VD) for reconstructing a predicted image region (PBB), with the predicted image region (PBB) being determined by a local and a temporal predictor (OP, ZP), with the local predictor (OP) and the temporal predictor (ZP) having been formed on the basis of a determination device (VE) for determining a predicted image region (PBB) according to claim 10, with

    - a first reconstruction module (M'1) to form a first image region (BBT) based on the temporal predictor (ZP) and one of the predecessor images (RB) temporally preceding the image (B0) ;
    - a second reconstruction module (M'2) to form the second image region (BBO) based on an image region (RBB) already reconstructed in the image (B0) ;
    - a third reconstruction module (M'3) to reconstruct the predicted image region (PBB) by linking the first and second image regions (BBT, BBO).

**Revendications**

1. Procédé pour déterminer une zone d'image prédite (PBB) pour une zone d'image (BB) d'une image (B0), dans lequel

   a) dans une première étape (1/3), un prédicteur dans le temps (ZP) pour la zone d'image (BB) est déterminé sur la base d'une image précédente (RB) reconstruite et antérieure dans le temps à l'image (B0),
   b) dans une seconde étape, un prédicteur local (OP) pour la zone d'image (BB) est déterminé à l'intérieur d'une zone d'image reconstituée (RBB) de l'image (B0), qui minimise une cote d'erreur (FM) entre la zone d'image à prédire (BB) et la zone d'image (PBB) prédite sur la base des prédicteurs dans le temps et locaux (ZP, PO),
   c) la zone d'image prédite (PBB) est déterminée par le prédicteur local (OP) avec l'utilisation de la zone d'image reconstruite (RBB) et par le prédicteur dans le temps (ZP) avec l'utilisation de l'une des images précédentes (RB).

2. Procédé selon la revendication 1,
   **caractérisé en ce que**

la zone d'image prédite (PBB) est générée par la combinaison d'une première zone d'image (BBT) formée par le prédicteur local (ZP) et d'une seconde zone d'image (BBO) décrite par le prédicteur local (OP) sur la base d'une règle de combinaison (VKR).

**3.** Procédé selon la revendication 2,
**caractérisé en ce que**
une combinaison pondérée est décrite par la règle de combinaison (VKR) au moyen de facteurs de pondération ($\alpha$, $\beta$) de points d'image (BP) correspondants de la première et de la seconde zone d'image (BBT, BBO).

**4.** Procédé selon la revendication 3,
**caractérisé en ce que**
les facteurs de pondération ($\alpha$, $\beta$) sont décrits individuellement pour chaque point d'image (BP) de la première et/ou de la seconde zone d'image (BBT, BBO).

**5.** Procédé selon l'une quelconque des revendications 2 à 4,
**caractérisé en ce**
**qu'**une rotation ou un cisaillement au moins de la première ou la seconde zone d'image (BBT, BBO) est effectué sur la base de la règle de combinaison (VKR).

**6.** Procédé selon l'une quelconque des revendications 2 à 5,
**caractérisé en ce**
**qu'**on sélectionne la règle de combinaison (VKR) qui minimise la cote d'erreur (FM) à partir d'un ensemble de différentes règles de combinaison.

**7.** Procédé selon l'une quelconque des revendications précédentes,
**caractérisé en ce**
**qu'**une zone d'image est référencée par le prédicteur local (OP) à l'intérieur de la zone d'image déjà reconstituée (RBB) de l'image (BO).

**8.** Procédé selon l'une quelconque des revendications précédentes,
**caractérisé en ce**
**qu'**on sélectionne le mode d'intraprédiction (IPM) qui minimise la cote d'erreur (FM) pour déterminer le prédicteur local (OP) à partir d'un groupe de modes d'intraprédiction pouvant être prédéfinis.

**9.** Procédé pour la reconstruction d'une zone d'image prédite (PBB), la zone d'image prédite (PBB) étant déterminée par un prédicteur local et un prédicteur dans le temps (OP, ZP), qui ont été formés sur la base d'un procédé pour déterminer une zone d'image prédite selon l'une quelconque des revendications précédentes, procédé dans lequel la zone d'image prédite (PBB) est générée par la combinaison d'une première zone d'image (BBT) formée par le prédicteur dans le temps (ZP) et d'une seconde zone d'image (BBO) décrite par le prédicteur local (OP).

**10.** Dispositif de détermination (VE) pour déterminer une zone d'image prédite (PBB) pour une zone d'image (BB) d'une image (B0), comprenant

- un premier module (M1) pour déterminer un prédicteur dans le temps (ZP) pour la zone d'image (BB) de l'image (B0) sur la base d'une image précédente (RB) reconstituée et antérieure dans le temps à l'image (B0) dans une première étape (1/3)
- un second module (M2) pour déterminer un prédicteur local (OP) dans une seconde étape pour la zone d'image (BB) sur la base d'une zone d'image reconstruite (RBB) de l'image (BO), lequel prédicteur minimise une cote d'erreur (FM) entre la zone d'image (BB) à prédire et la zone d'image (PBB) prédite sur la base des prédicteurs dans le temps et locaux (ZP, PO), la zone d'image prédite (PBB) étant déterminée par le prédicteur local (OP) avec l'utilisation de la zone d'image reconstruite (RBB) et par le prédicteur dans le temps (ZP) avec l'utilisation de l'une des images précédentes (RB).

**11.** Dispositif de reconstruction (VD) pour la reconstruction d'une zone d'image prédite (PBB), la zone d'image prédite (PBB) étant déterminée par un prédicteur local et un prédicteur dans le temps (OP, ZP), le prédicteur local (OP) et le prédicteur dans le temps (ZP) ayant été formés sur la base d'un dispositif de détermination (VE) pour la détermination d'une zone d'image prédite (PBB) selon la revendication 10, comprenant

- un premier module de reconstruction (M'1) pour la formation d'une première zone d'image (BBT) sur la base du prédicteur dans le temps (ZP) et d'une des images précédentes (RB) antérieures dans le temps à l'image (BO) ;
- un second module de reconstruction (M'2) pour la formation de la seconde zone d'image (BBO) sur la base d'une zone d'image (RBB) déjà reconstruite dans l'image (BO) ;
- un troisième module de reconstruction (M'3) pour la reconstruction de la zone d'image prédite (PBB) par la combinaison de la première et de la seconde zone d'image (BBT, BBO).

# FIG 1

SP

RB

BBO    RBB

BB

BBT    BO    BB

BP

BB

VE

S1, M1

ZP

M2, S2(FM)
(α, β)

OP

PBB (RB(ZP), RBB (OP))

DS (ZP, OP, VKR)

FIG 2

VD

DS (ZP, OP, VKR)

BO  RBB

BB

OP

ZP

RB

S'1, M'1

S'2, M'2

BBO

BBT

S'3, M'3
(α, β)

PBB

FIG 3

# FIG 4

BO

| RBC (3,3) | RBA (0,3) | RBA (1,3) | RBA (2,3) | RBA (3,3) |
| --- | --- | --- | --- | --- |
| RBD (3,0) | BB (0,0) | BB (1,0) | BB (2,0) | BB (3,0) |
| RBD (3,1) | BB (0,1) | BB (1,1) | BB (2,1) | BB (3,1) |
| RBD (3,2) | BB (0,2) | BB (1,2) | BB (2,2) | BB (3,2) |
| RBD (3,3) | BB (0,3) | BB (1,3) | BB (2,3) | BB (3,3) |

BB

**EP 1 941 744 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1501312 A2